# EUROPÄISCHE PATENTANMELDUNG

(11) **EP 1 892 146 A2**
(43) Veröffentlichungstag der Anmeldung: **27.02.2008**
(21) Anmeldenummer: 07002692.7
(22) Anmeldetag: 08.02.2007
(51) Int. Cl.: B60N 2/46

(54) **Armauflage als Ausstattungsteil für Kraftfahrzeuge**

(30) Priorität: 23.08.2006 DE 202006012975 U
(71) Anmelder: Key Plastics Lennestadt GmbH & Co. KG, 57368 Lennestadt (DE)
(72) Erfinder: Hesener, Ralf, 57413 Finnentrop (DE); Lohmann, Horst, 59846 Sundern (DE); Alt, Daniel, 63543 Neuberg (DE); Kramer, Stefan, 57234 Wilnsdorf (DE)
(74) Vertreter: Köchling, Conrad-Joachim

(57) **Zusammenfassung**

Um ein Armauflageteil als Ausstattungsteil für Kraftfahrzeuge, bestehend aus einem formstabilen, länglichen Grundträger (1), der mit einem Ende an einem Stützteil (8) befestigt ist, einem in Längsrichtung des Grundträgers (1) begrenzt verschieblich an diesem angeordneten Führungsträger (3), einem am Führungsträger (3) auf dessen dem Grundträger abgewandten Bereich angeordneten Polster (7) sowie Führungseinrichtungen zur unverdrehbaren Führung des Führungsträgers am Grundträgerzu schaffen, welches unter Verminderung der notwendigen Einzelteile kostengünstig und rationell zur Verfügung gestellt werden kann, ohne dass die Lebensdauer des Teiles eingeschränkt wäre, wird vorgeschlagen, dass am Grundträger ein parallel zu dessen Längserstreckung ausgerichtetes Führungsrohr oder eine Führungsstange (2) befestigt ist, auf der der Führungsträger (3) verschieblich gelagert ist, und dass neben der Führungsstange (2) oder dem Führungsrohr mindestens eine dazu parallele Stützfläche (6) am Grundträger (1) ausgebildet ist, auf der die Unterseite des Führungsträgers (3) abgestützt ist.

## Beschreibung

Die Erfindung betrifft ein Armauflageteil als Ausstattungsteil für Kraftfahrzeuge, bestehend aus einem formstabilen, länglichen Grundträger, der mit einem Ende starr oder vorzugsweise schwenkbeweglich an einem Stützteil befestigt ist, einem in Längsrichtung des Grundträgers begrenzt verschieblich an diesem angeordneten Führungsträger, einem am Führungsträger auf dessen dem Grundträger abgewandten Bereich angeordneten Polster sowie Führungseinrichtungen zur unverdrehbaren Führung des Führungsträgers am Grundträger.

Solche Armauflageteile sind als Ausstattungsteile für Kraftfahrzeuge bekannt.
Das gesamte Armauflageteil kann beispielsweise starr an einer Unterkonstruktion befestigt sein. Vorzugsweise ist ein solches Armauflageteil schwenkbar ausgebildet, so dass es in eine Nichtgebrauchslage parallel zu einer Rücklehne eines Sitzteiles und in eine Gebrauchslage verschwenkbar ist, in der es quer von der Rückenlehne des Sitzteiles abragt und eine Auflage für den Arm des Benutzers bildet, der in dem entsprechenden Sitz sitzt.

Um das Polster, welches die eigentliche Auflage für den Arm bildet, längs der Erstreckung des Armauflageteils bzw. des Grundträgers verschieben zu können, ist es bekannt, das Polster auf einem Führungsträger anzuordnen, der am Grundträger begrenzt verschieblich angeordnet ist. Auf diese Weise kann das Polster in eine erste Stellung verlagert werden, in der es im hinteren Ende des Grundträgers angenähert ist oder in eine zweite Stellung, in der es so weit wie möglich, für das vordere Ende des Grundträgers hinausragend verschoben ist. Um den Führungsträger verschieblich am Grundträger zu fixieren, sind Führungseinrichtungen bekannt, die einerseits die Längsverschiebung des Führungsträgers auf dem Grundträger ermöglichen, andererseits aber eine Schwenk- oder Drehbewegung des Führungsträgers um seine Mittellängsachse unterbinden. Im Stand der Technik ist es dazu bekannt, dass der Führungsträger an zwei zueinander parallelen Führungsrohren geführt ist, die am Grundträger befestigt sind oder aber es sind Kugelführungen paarweise vorgesehen, mittels derer der Führungsträger am Grundträger längs verschieblich und unverdrehbar geführt ist.

Die bekannten Ausführungen sind aufwendig, da zumindest zwei Führungsrohre und/oder zwei Kugelführungen vorgesehen sein müssen.

Ausgehend von diesem Stand der Technik liegt der Erfindung die Aufgabe zugrunde, ein Armauflageteil gattungsgemäßer Art zu schaffen, welches unter Verminderung der notwendigen Einzelteile kostengünstig und rationell zur Verfügung gestellt werden kann, ohne dass die Lebensdauer des Teiles eingeschränkt wäre.

Zur Lösung dieser Aufgabe schlägt die Erfindung vor, dass am Grundträger ein parallel zu dessen Längserstreckung ausgerichtetes Führungsrohr oder eine Führungsstange befestigt ist, auf der der Führungsträger verschieblich gelagert ist, und dass neben der Führungsstange oder dem Führungsrohr mindestens eine dazu parallele Stützfläche am Grundträger ausgebildet ist, auf der die Unterseite des Führungsträgers abgestützt ist.

Gemäß der Erfindung ist die Führungseinrichtung dadurch gebildet, dass lediglich ein parallel zur Längserstreckung des Grundträgers ausgerichtetes Führungsrohr an dem Grundträger angeordnet ist. Auf diesem Führungsrohr ist der Führungsträger längs verschieblich gelagert. Die Verschiebemöglichkeit und die Führung sind damit gebildet. Um zu vermeiden, dass der Führungsträger gegenüber dem Grundträger kippt bzw. sich auf dem Führungsrohr oder der Führungsstange dreht, ist neben der Führungsstange oder dem Führungsrohr mindestens eine dazu parallele Stützfläche am Grundträger ausgebildet. Auf dieser Stützfläche stützt sich die Unterseite des Führungsträgers ab. Es ist hierdurch vermieden, dass der Führungsträger sich um die Führungsstange verdrehen kann. Die Stützfläche kann ebenso wie der gesamte Grundträger und der Führungsträger aus Kunststoff gefertigt sein, wobei der Kunststoff ausreichende Gleiteigenschaften hat, um eine gleitende Abstützung der Unterseite des Führungsträgers auf der Stützfläche zu ermöglichen. Falls eine schwergängige Verschiebung erwünscht ist, können die entsprechenden aufeinander gleitenden Flächen auch mit reibungserhöhenden Belägen oder in reibungserhöhende Art und Weise ausgebildet sein, um einerseits die Verschiebung etwas zu erschweren, andererseits aber die Lagesicherung der Teile zueinander in jeder beliebigen verschobenen Zwischenlage ausreichend zu gewährleisten.

Besonders bevorzugt ist vorgesehen, dass die Führungsstange oder das Führungsrohr etwa mittig des Grundträgers an diesem befestigt ist und mit Abstand beidseitig neben der Führungsstange oder dem Führungsrohr Stützflächen am Grundträger ausgebildet sind, auf denen der Führungsträger abgestützt ist.

Hierdurch wird eine besonders sichere Führung und Abstützung des Führungsträgers auf dem Grundträger erreicht. Auch bei außermittiger Belastung des Führungsträgers durch den Benutzer wird ein Verdrehen oder ein Kippen des Führungsträgers gegenüber dem Grundträger vermieden.

Eine besondere Ausgestaltung wird darin gesehen, dass der Führungsträger unterseitig, auf seiner dem Grundträger zugewandten Seite mindestens eine von der Führungsstange oder dem Führungsrohr durchgriffene Führungsbuchse aufweist.

Die Führungsstange oder dass Führungsrohr kann aus blankem Metall bestehen, wobei durch die Führungsbuche eine einwandfreie und dauerhafte Führung der Teile ineinander erreicht ist.

Des Weiteren kann bevorzugt vorgesehen sein, dass der Grundträger ein etwa rechteckiges Rahmenteil ist, dessen kurze Rahmenseiten eine nahe des Stützteils angeordnete Querstrebe und eine am freien Ende befindliche Querstrebe bilden, wobei die langen Rahmenseiten Längsstreben bilden, deren dem Führungsträger zugewandte Flächen die Stützflächen für den Führungsträger bilden und mittig zwischen den Längsstreben das Stützrohr oder die Stützstange angeordnet ist, deren eines Ende in eine Aufnahme einer Querstrebe eingesteckt ist und deren anderes Ende eine Aufnahme der anderen Querstrebe durchgreift und mittels eines Festlagers an dieser befestigt ist.

Eine solche Anordnung erlaubt eine materialsparende Ausbildung und eine einfache Montage der Einzelteile.

Bevorzugt kann zudem vorgesehen sein, dass das Polster auf einer formstabilen Trägerplatte montiert ist, die am Führungsträger befestigt ist.

Hierbei kann bevorzugt vorgesehen sein, dass die Trägerplatte mit einer Verkleidungsplatte kombiniert ist, die die Unterseite des Grundträgers mindestens teilweise überdeckt, wobei die Trägerplatte mit der Verkleidungsplatte einen Einschub bildet, der auf das freie Ende des Grundträgers aufgeschoben ist.

Ein Ausführungsbeispiel der Erfindung ist in der Zeichnung dargestellt und im Folgenden näher beschrieben.
Es zeigt:
- Figur 1: ein erfindungsgemäßes Armauflageteil im Mittellängsschnitt gesehen;

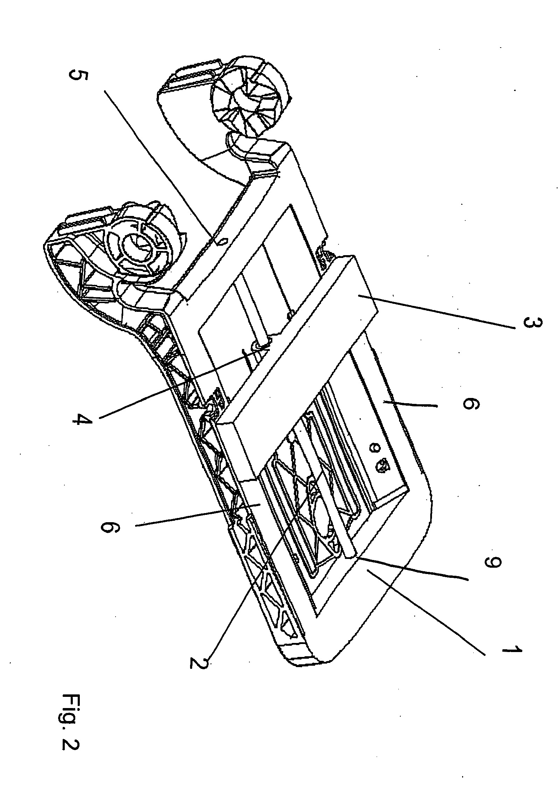

- Figur 2: Einzelheiten des Armauflageteils in isometrischer Ansicht.

In der Zeichnung ist ein Armauflageteil als Ausstattungsteil für Kraftfahrzeuge gezeigt.
Es besteht aus einem formstabilen, länglichen Grundträger 1, der im Ausführungsbeispiel schwenkbeweglich an einem Stützteil 8 befestigt ist. Der Grundträger 1 ist dabei aus der in der Zeichnungsfigur 1 dargestellten Gebrauchslage in eine Nichtgebrauchslage nach oben verschwenkbar, in der er beispielsweise in eine etwa parallel zur Rückenlehne eines Sitzes ausgerichtete Lage verstellt ist.

An dem Grundträger 1 ist ein Führungsträger 3 in Längsrichtung des Grundträgers 1 begrenzt verschieblich gehalten. Am Führungsträger 3 ist auf dessen dem Grundträger 1 abgewandten Bereich ein Polster 7 angeordnet. Ferner sind später noch beschriebene Führungseinrichtungen zur unverdrehbaren Führung des Führungsträgers 3 am Grundträger 1 vorgesehen.

Hierzu ist am Grundträger 1 ein parallel zu dessen Längserstreckung ausgerichtetes Führungsrohr oder eine Führungsstange 2 befestigt.
Auf der Führungsstange 2 oder dem Führungsrohr ist der eigentliche Führungsträger 3 längs verschieblich gelagert. Neben der Führungsstange 2 oder dem Führungsrohr sind dazu parallele Stützflächen 6 am Grundträger 1 ausgebildet, auf denen die Unterseite des Randes des Führungsträgers 3 abgestützt ist. Hierdurch ist einerseits die Verschiebung des Führungsträges 3 relativ zum Grundträger 1 entlang der Führungsstange 2 ermöglicht und andererseits ein Verdrehen des Führungsträgers 3 auf der Führungsstange 2 verhindert. Insbesondere ist die Führungsstange 2 oder das Führungsrohr etwa mittig des Grundträgers 1 an diesem befestigt. Mit Abstand von der Führungsstange oder dem Führungsrohr 2 sind beidseitig neben dieser Stützflächen 6 am Grundträger 1 ausgebildet, auf denen die Ränder des Führungsträgers 3 abgestützt und bei der Verschiebebewegung geführt sind. Insbesondere weist der Führungsträger 3 unterseitig auf seiner dem Grundträger 1 zugewandten Seite eine von der Führungsstange 2 oder dem Führungsrohr durchgriffene Führungsbuchse 4 auf. Nach dem Ausführungsbeispiel ist der Grundträger 1 ein etwa rechteckiges Rahmenteil, dessen kurze Rahmenseiten eine nahe des Stützteils 8 angeordnete Querstrebe und eine am freien Ende des Grundträgers 1 ausgebildete Querstrebe bilden. Die langen Rahmenseiten bilden Längsstreben, deren den Führungsträger 3 zugewandte Flächen die Stützflächen 6 für den Führungsträger 3 bilden. Mittig zwischen den Längsstreben ist das Stützrohr über die Stützstange 2 angeordnet, deren eines Ende in eine Aufnahme 9 einer Querstrebe eingesteckt ist und deren anderes Ende eine Aufnahme 5 der anderen Querstrebe durchgreift und mittels eines Festlagers an dieser befestigt ist.

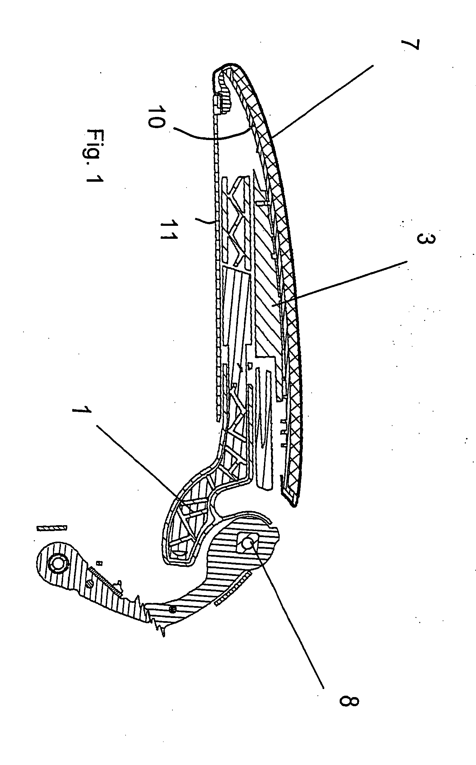

Wie insbesondere aus Figur 1 ersichtlich, ist das Polster 7 auf einer formstabilen Trägerplatte 10 montiert, die am Führungsträger 3 befestigt ist. Die Trägerplatte 10 ist mit einer Verkleidungsplatte 11 kombiniert, die die Unterseite des Grundträgers 1 mindestens teilweise überdeckt, wobei die Trägerplatte 7 mit der Verkleidungsplatte 10 einen Einschub bildet, der auf das freie Ende des Grundträgers 1 aufgeschoben ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Armauflageteil als Ausstattungsteil für Kraftfahrzeuge, bestehend aus einem formstabilen, länglichen Grundträger (1), der mit einem Ende starr oder vorzugsweise schwenkbeweglich an einem Stützteil (8) befestigt ist, einem in Längsrichtung des Grundträgers (1) begrenzt verschieblich an diesem angeordneten Führungsträger (3), einem am Führungsträger (3) auf dessen dem Grundträger abgewandten Bereich angeordneten Polster (7) sowie Führungseinrichtungen zur unverdrehbaren Führung des Führungsträgers am Grundträger, **dadurch gekennzeichnet, dass** am Grundträger ein parallel zu dessen Längserstreckung ausgerichtetes Führungsrohr oder eine Führungsstange (2) befestigt ist, auf der der Führungsträger (3) verschieblich gelagert ist, und dass neben der Führungsstange (2) oder dem Führungsrohr mindestens eine dazu parallele Stützfläche (6) am Grundträger (1) ausgebildet ist, auf der die Unterseite des Führungsträgers (3) abgestützt ist.

2. Armauflageteil nach Anspruch 1, **dadurch gekennzeichnet, dass** die Führungsstange oder das Führungsrohr (2) etwa mittig des Grundträgers (1) an diesem befestigt ist und mit Abstand beidseitig neben der Führungsstange (2) oder dem Führungsrohr Stützflächen (6) am Grundträger ausgebildet sind, auf denen der Führungsträger (3) abgestützt ist.

3. Armauflageteil nach Anspruch 1 oder 2, **dadurch gekennzeichnet, dass** der Führungsträger (3) unterseitig, auf seiner dem Grundträger (1) zugewandten Seite mindestens eine von der Führungsstange (2) oder dem Führungsrohr durchgriffene Führungsbuchse (4) aufweist.

4. Armauflageteil nach Anspruch 1 bis 3, **dadurch gekennzeichnet, dass** der Grundträger (1) ein etwa rechteckiges Rahmenteil ist, dessen kurze Rahmenseiten eine nahe des Stützteils (8) angeordnete Querstrebe und eine am freien Ende befindliche Querstrebe bilden, wobei die langen Rahmenseiten Längsstreben bilden, deren dem Führungsträger (3) zugewandte Flächen die Stützflächen (6) für den Führungsträger (3) bilden und mittig zwischen den Längsstreben das Stützrohr (2) oder die Stützstange angeordnet ist, deren eines Ende in eine Aufnahme (9) einer Querstrebe eingesteckt ist und deren anderes Ende eine Aufnahme (5) der anderen Querstrebe durchgreift und mittels eines Festlagers an dieser befestigt ist.

5. Armauflageteil nach einem der Ansprüche 1 bis 4, **dadurch gekennzeichnet, dass** das Polster (7) auf einer formstabilen Trägerplatte (10) montiert ist, die am Führungsträger (3) befestigt ist.

6. Armauflageteil nach Anspruch 5, **dadurch gekennzeichnet, dass** die Trägerplatte (10) mit einer Verkleidungsplatte (11) kombiniert ist, die die Unterseite des Grundträgers (1) mindestens teilweise überdeckt, wobei die Trägerplatte (10) mit der Verkleidungsplatte (11) einen Einschub bildet, der auf das freie Ende des Grundträgers (1) aufgeschoben ist.
